(19) Europäisches Patentamt / European Patent Office / Office européen des brevets

(11) **EP 3 264 361 A1**

(12) **EUROPEAN PATENT APPLICATION**
published in accordance with Art. 153(4) EPC

(43) Date of publication:
**03.01.2018 Bulletin 2018/01**

(51) Int Cl.:
***G06T 7/00*** *(2017.01)*

(21) Application number: **16748536.6**

(86) International application number:
**PCT/CN2016/070192**

(22) Date of filing: **05.01.2016**

(87) International publication number:
**WO 2016/127735 (18.08.2016 Gazette 2016/33)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **13.02.2015 CN 201510080690**

(71) Applicant: **BYD Company Limited**
**Shenzhen, Guangdong 518118 (CN)**

(72) Inventors:
• ZHENG, Li
  Shenzhen
  Guangdong 518118 (CN)
• XU, Kunping
  Shenzhen
  Guangdong 518118 (CN)
• YANG, Yun
  Shenzhen
  Guangdong 518118 (CN)

(74) Representative: **Gulde & Partner**
**Patent- und Rechtsanwaltskanzlei mbB**
**Wallstraße 58/59**
**10179 Berlin (DE)**

(54) **METHOD AND DEVICE FOR CALCULATING RIDGE DISTANCE**

(57) The present disclosure discloses a method and device for calculating a line distance. The method includes: obtaining an original image and performing grayscale processing to generate a grayscale image; generating a radical image and a tangential image according to the grayscale image; performing filtering on the grayscale image according to the tangential image to generate a smoothened image and converting the smoothened image into a binary image; dividing the binary image into blocks and determining a radical direction of a center point of each block according to the radical image; traversing pixels in the radical direction of the center point of each block to calculate a number of times pixel values of two adjacent pixels within the each block change between a first pixel value and a second pixel value, and to calculate a coordinate and sub-pixel value of a boundary point corresponding to a changing-point; and generating the line distance according to the number of times of the change, and the coordinate and the sub-pixel value of the boundary point corresponding to the changing-point. The method seeks the boundary point of the fingerprint ridge lines and the fingerprint valley lines and calculates the line distance according to the coordinates and the sub-pixel value of the boundary point, improving accuracy, strengthening the ability to resist noise.

obtaining an original image and performing grayscale processing to generate a grayscale image — S1

generating a radical image and a tangential image according to the grayscale image — S2

performing filtering on the grayscale image according to the tangential image to generate a smoothened image and converting the smoothened image into a binary image — S3

dividing the binary image into blocks and determining the radical direction of the center point of each block — S4

traversing pixels in the radical direction of the center point of each block to calculate a total number of times the pixel values of two adjacent pixels within each block change between a first pixel value and a second pixel value, and to calculate coordinates and sub-pixel value of a boundary point corresponding to the changing-point. The first pixel value is the pixel value of a pixel of a ridge line, and the second pixel value is the pixel value of a pixel of a valley line. — S5

generating the line distance according to the total number of times the pixel values of two adjacent pixels within the block change between the first pixel value and the second pixel value, and according to the coordinates and the sub-pixel value of the boundary point corresponding to the changing-point — S6

Fig. 2

EP 3 264 361 A1

**Description**

This application claims priority and benefits of Chinese Patent Application No. 201510080690.0, filed with State Intellectual Property Office, P. R. C. on February 13, 2015, the entire content of which is incorporated herein by reference.

**FIELD**

The present disclosure relates to an image processing technology field and, more particularly, to a method for calculating line distance and a device thereof.

**BACKGROUND**

With development of society, people raise higher demand on accuracy, security, and practicality of identity authentication. Traditional identity authentication methods, such as passwords, keys, identity cards, etc., have problems such as easy to forget, to leak, to lose, to counterfeit and other issues, causing inconvenience and security issues to daily life. The biometric technology based identification can overcome many defects of the traditional identity authentication and, thus, has become a hotspot in current security technology research. Among a variety of identity authentication methods based on the biological characteristics, fingerprint recognition is a method used earliest and widest. Due to its high stability, uniqueness, easy to collect, and high security, etc., fingerprint is an ideal biological characteristic that can be used for identity authentication, and the market share of fingerprint recognition is increasing year by year. As the fingerprint image belongs to personal privacy, the fingerprint recognition system generally does not directly store the fingerprint image, but extracts feature information of the fingerprint from the fingerprint image via an algorithm, and then performs fingerprint matching and recognition to complete the identity authentication. Therefore, the fingerprint recognition algorithm with high reliability is key to ensure a correct identification of the fingerprint.

Further, the line distance is defined as a distance between a given ridge line and an adjacent valley line. In general, the distance between the center of the ridge line and the center of the valley line is calculated as the line distance. The larger the line distance is, the sparser the ridges are; the smaller the line distance is, the denser the ridges are. The value of the line distance depends on the structure of the fingerprint itself and the image acquisition resolution.

Related technology about calculating the line distance can be divided into two categories: a first category, estimating the fingerprint line-distance based on an entire image. Ideally, it is considered that the line distance of the fingerprint image is in normal distribution. However, in an actual fingerprint database, the line distance of a same fingerprint image can have twice amount of difference and, thus, the line distance cannot be calculated based on the entire image. A second category to estimate local line distance based on image regions, which requires to accurately find a peak point of a spectrum. This may be difficult to achieve in the algorithm, and the line distance obtained may be inaccurate.

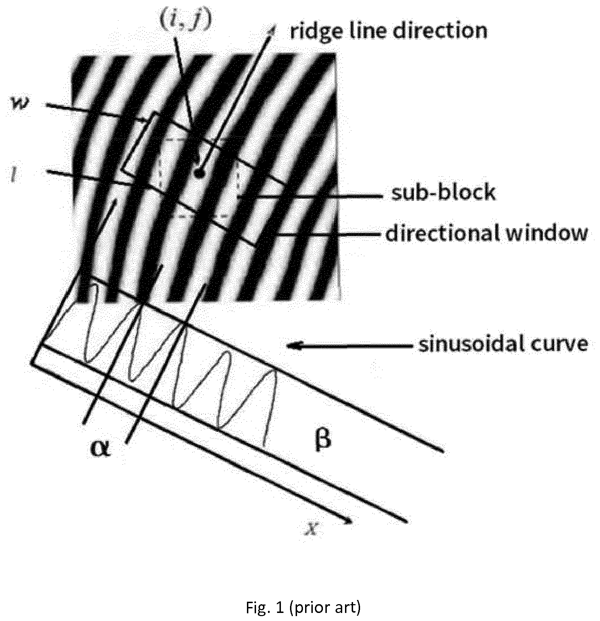

For example, in the second category of algorithm in the related art, in a direction perpendicular to the lines in the fingerprint image, the pixel gray scale value exhibits a characteristic of a discrete sinusoidal waveform. As shown in Fig. 1, the distance between the two ridge lines can be expressed as the distance between two adjacent peaks of the sinusoidal waveforms. Because the fingerprint image actually collected by the sensor can contain noise, and the noise information mainly comes from the sensor itself and the actual conditions, such as the finger having water, oil, or peeling skin, the peak situations in the sinusoidal waveforms become more complex. For example, the sinusoidal waveform cannot have a single peak and, in fact, the peak point cannot be found accurately. For fingerprint images collected on a same finger pressed with same force intensity, the line distance obtained via this method at a same position of the finger are quite different. For the fingerprint grayscale image itself, the distribution of the ridge lines and the valley lines along the direction perpendicular to the lines is not an ideal sine wave, and does no have a prominent peak value of a peak. Therefore, the calculation method for the line distance based on the grayscale can only adapt to a clear and uniform fingerprint image.

**SUMMARY**

Embodiments of the present disclosure seek to solve at least one of the problems existing in the related art to at least some extent. Therefore, a first objective of the present disclosure is to provide a method for calculating a line distance, the calculating method seeks the boundary points of the fingerprint ridge lines and the fingerprint valley lines and calculates the line distance according to the coordinates and the sub-pixel values of the boundary points. The accuracy is improved, noise resistance ability is strong, the overall density characteristics of the fingerprint can be reflected more accurately, and the scope of its applications is wider.

The second objective of the present disclosure is to provide a device for calculating the line distance.

In order to achieve the above objectives, the method for calculating the line distance according to some embodiments of the first aspect of the present disclosure includes following steps: obtaining an original image and performing grayscale processing to generate a grayscale image; generating a radical image and a tangential image according to the grayscale image; performing filtering on the grayscale image according to the tangential image to generate a smoothened image and converting the smoothened image into a binary image; dividing the binary image into blocks and determining a radical direction of a center point of each block according to the radical image; traversing pixels in the radical direction of the center point of each block to calculate a number of times pixel values of two adjacent pixels within the each block change between a first pixel value and a second pixel value, and to calculate a coordinate and sub-pixel value of a boundary point corresponding to a changing-point, wherein the first pixel value is a pixel value of a pixel of a ridge line, and the second pixel value is a pixel value of a pixel of a valley line; and generating the line distance according to the number of times the pixel values of two adjacent pixels within the each block change between the first pixel value and the second pixel value, and according to the coordinate and the sub-pixel value of the boundary point corresponding to the changing-point.

The method for calculating the line distance according to the embodiments of the present disclosure seeks the boundary points of the fingerprint ridge lines and the fingerprint valley lines and calculates the line distance according to the coordinates and the sub-pixel values of the boundary points. The accuracy of the line distance may be improved, the true features of the fingerprint can be obtained more closely, and the overall density characteristics of the fingerprint can be reflected more accurately. Moreover, this method's ability to resist noise is strong, and the scope of its applications is wider.

In order to achieve the above objectives, the device for calculating line distance according to some embodiments of the second aspect of the present disclosure includes: a gray processing module configured to obtain an original image and to perform grayscale processing to generate a grayscale image; a generating module configured to generate a radical image and a tangential image according to the grayscale image; a smoothing module configured to perform filtering on the grayscale image according to the tangential image to generate a smoothened image and to convert the smoothened image into a binary image; a block processing module configured to divide the binary image into blocks and to determine a radical direction of a center point of each block according to the radical image; a sub-pixel calculating module configured to traverse pixels in the radical direction of the center point of each block to calculate a number of times pixel values of two adjacent pixels within the each block change between a first pixel value and a second pixel value, and to calculate a coordinate and sub-pixel value of a boundary point corresponding to a changing-point, wherein the first pixel value is a pixel value of a pixel of a ridge line, and the second pixel value is a pixel value of a pixel of a valley line; and a line distance generating module configured to generate the line distance according to the number of times the pixel values of two adjacent pixels within the each block change between the first pixel value and the second pixel value, and according to the coordinate and the sub-pixel value of the boundary point corresponding to the changing-point.

The device for calculating line distance according to the embodiments of the present disclosure seeks the boundary points of the fingerprint ridge lines and the fingerprint valley lines and calculates the line distance according to the coordinates and the sub-pixel values of the boundary points. The accuracy of the line distance may be improved, the true features of the fingerprint can be obtained more closely, and the overall density characteristics of the fingerprint can be reflected more accurately. Moreover, this method's ability to resist noise is strong, and the scope of its applications is wider.

## BRIEF DESCRIPTION OF THE DRAWINGS

Fig. 1 is a schematic diagram of the sine distribution characteristics of ridge lines in a partial area in the related art;
Fig. 2 is a flowchart diagram of a method for calculating a line distance according to an embodiment of the present disclosure;
Fig. 3 is a schematic diagram of a boundary position where pixel value changes from 0 to 1 and the number of times of changing according to an embodiment of the present disclosure;
Fig. 4 is a flowchart diagram of calculating a sub-pixel value of a boundary point according to an embodiment of the present disclosure;
Figs. 5A-5C are schematic diagrams of calculating sub-pixel values along a horizontal direction according to an embodiment of the present disclosure;
Figs. 6A-6C are schematic diagrams of calculating sub-pixel values along a non-vertical or non-horizontal direction according to an embodiment of the present disclosure;
Fig.7A is a schematic diagram of a grayscale image according to an embodiment of the present disclosure;
Fig. 7B is a schematic diagram of a tangential image according to an embodiment of the present disclosure;
Fig. 7C is a schematic diagram of a smooth image according to an embodiment of the present disclosure;

Fig. 7D is a schematic diagram of a binary image according to an embodiment of the present disclosure;

Fig. 7E is a results-schematic diagram after Gabor filtering data of final line distance of each point according to an embodiment of the present disclosure; and

Fig. 8 is a schematic diagram of a device for calculating the line distance according to an embodiment of the present disclosure.

## DETAILED DESCRIPTION

Exemplary embodiments will be described in detail herein, and examples thereof are illustrated in accompanying drawings. The same or similar elements and the elements having same or similar functions are denoted by like reference numerals throughout the descriptions. The embodiments described herein with reference to drawings are explanatory, illustrative, and used to generally understand the present disclosure. The embodiments shall not be construed to limit the present disclosure.

In order to solve problems of existing line distance algorithm, such as inaccurate calculated line distance, and narrow application range of the algorithm, etc., the present disclosure provides an improved method and device for calculating line distance. In the following, the method and the device for calculating line distance according to the present disclosure are described in detail with reference to the drawings.

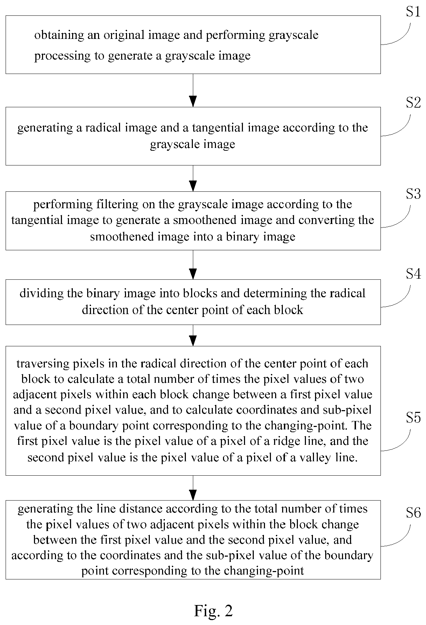

Fig. 2 is a flowchart of the method for calculating the line distance according to an embodiment of the present disclosure. As shown in Fig. 2, the method for calculating the line distance according to the embodiments of the present disclosure includes the following steps.

S1, obtaining an original image and performing grayscale processing to generate a grayscale image.

Specifically, the grayscale processing is performed on the original image to generate the grayscale image A (i, j).

S2, generating a radical image and a tangential image according to the grayscale image.

Specifically, for the grayscale image A(i,j), the radical image 01 (i, j) and the tangential image 02 (i, j) can be obtained via a gradient method.

S3, performing filtering on the grayscale image according to the tangential image to generate a smoothened image and converting the smoothened image into a binary image.

In an embodiment of the present disclosure, performing filtering on the grayscale image according to the tangential image to generate the smoothened image particularly includes: performing 1 *7 mean or average filtering on the grayscale image according to the tangential image to generate the smoothened image.

Specifically, 1*7 mean filtering is performed on the gray scale image A (i, j) using the tangential image O2(i,j) to remove burrs, the smoothened image B(i,j) is obtained, and then the smoothened image B(i,j) is converted into the binary image D(i,j) using differential binarization processing.

S4, dividing the binary image into blocks and determining the radical direction of the center point of each block according to the radical image.

Specifically, the binary image D(i,j) is divided into blocks have a size of N*N (for example, N is 33), in which the blocks are sliding point by point and, therefore, there is an overlap between blocks.

Further, the radical direction of the center point of each block is read from the radical image 01 (i, j).

S5, in each block, traversing pixels in the radical direction of the center point of each block to calculate a total number of times the pixel values of two adjacent pixels within each block change between a first pixel value and a second pixel value, and to calculate coordinates and sub-pixel value of a boundary point corresponding to the changing-point. The first pixel value is the pixel value of a pixel of a ridge line, and the second pixel value is the pixel value of a pixel of a valley line. That is, the pixel with the first pixel value is a pixel of a ridge line, and the pixel with the second pixel value is a pixel of a valley line.

In an embodiment of the present disclosure, the first pixel value is 0, the second pixel value is 1. These pixel values are used as an example in the following description.

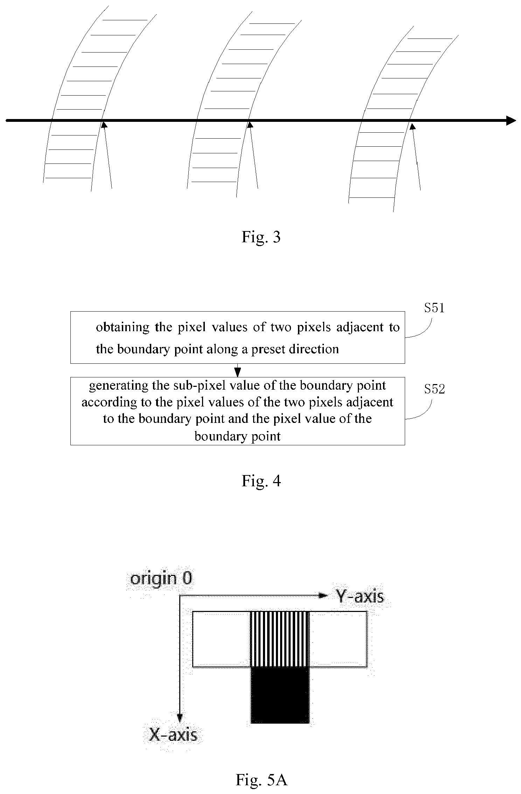

Specifically, for each block of the binary image D(i,j), within each block, the pixels in the radical direction of the center point of each block are traversed, the total number of times pixel values of two adjacent pixels within each block change from 0 to 1 and change from 1 to 0 are calculated, and the coordinates of the pixels of the changing-points are also calculated (i.e., coordinates of boundary points). As shown in Fig. 3, the stripe areas represent ridge lines, and the pixel value is 0; the blank areas are valley lines, and the pixel value is 1; and the locations pointed by the arrows are the locations where 0 changes to 1, i.e., the positions of the boundary points. As shown in Fig. 3, the total number of times 0 changes to 1 is 3. When the pixel values of two adjacent pixels change from 0 to 1, the coordinate of the boundary point can be recorded as the coordinate of the pixel with the pixel value of 0 of the two adjacent pixels, and can also be recorded as the coordinate of the pixel with the pixel value of 1 of the two adjacent pixels.

In an embodiment of the present disclosure, as shown in Fig. 4, the sub-pixel value of the boundary point corresponding to the changing-point is generated via the following steps.

551, obtaining the pixel values of two pixels adjacent to the boundary point along a pre-set direction.

S52, generating the sub-pixel value of the boundary point according to the pixel values of the two pixels adjacent to the boundary point and the pixel value of the boundary point.

Specifically, while traversing, the sub-pixel value of the boundary point is calculated at the same time, and the calculation can be divided into two situations, one is to calculate the sub-pixel value of the boundary point along a tilted direction, and the other is to calculate along a vertical or horizontal direction. The two situations will be described respectively in the following descriptions.

In an embodiment of the present disclosure, when the radical angle corresponding to the radical direction of the center point of the block is equal to 0 degree, the pre-set direction is a vertical direction; and when the radical angle corresponding to the radical direction of the center point of the block is equal to 90 degrees, the pre-set direction is a horizontal direction. When the radical angle corresponding to the radical direction of the center point of the block is equal to 0 degrees or 90 degrees, if both of the pixel values of the two pixels adjacent to the boundary point are the same as the pixel value of the boundary point, the sub-pixel value of the boundary point is 0; if only one of the pixel values of the two pixels adjacent to the boundary point is the same as the pixel value of the boundary point, the sub-pixel value of the boundary point is 0.5; if both of the pixel values of the two pixels adjacent to the boundary point are different from the pixel value of the boundary point, the sub-pixel value of the boundary point is 1.

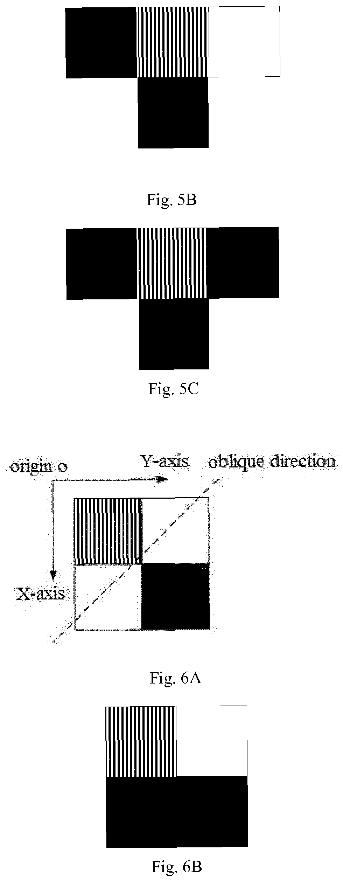

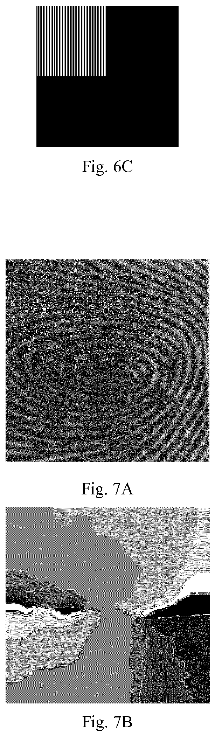

Specifically, Figs. 5A to 5C are schematic diagrams of calculating the sub-pixel value along the horizontal direction (e.g., the Y-axis direction shown in Fig. 5A). In the present disclosure, an upper left corner of the fingerprint image (e.g., the grayscale image shown in Fig. 7A) is used as an origin, and the vertical and horizontal boundaries of the fingerprint image are respectively used as the x-axis and the y-axis to establish the coordinate system. The radical angle corresponding to the radical direction of the center point the block is an angle between the radical direction of the center point of the block and the x-axis, in the figure, the block filled with vertical stripe represents the boundary point, the block filled with white represents the point on the valley line, and the block filled with black represents the point on ridge line. When calculating the sub-pixel value of the boundary point corresponding to the changing-point, the pixel values of two pixels on both sides of the boundary point are used for determination. If both of the pixel values of two pixels on both sides of the boundary point are equal to the pixel value of the boundary point, then $\delta$ (the sub-pixel value of the boundary point) takes a value of 0; if one of the pixel values of two pixels on both sides of the boundary point is equal to the pixel value of the boundary point, $\delta$ takes a value of 1/2; if both of the pixel values of two pixels on both sides of the boundary point are different from the pixel value of the boundary point, $\delta$ takes a value of 1. For example, the two pixels adjacent to the boundary point are the blocks both filled with white in Fig. 5A, the two pixels adjacent to the boundary point are the blocks respectively filled with black and white in Fig. 5B, the two pixels adjacent to the boundary point are the blocks both filled with black in Fig. 5C.

In another embodiment of the present disclosure, when the radical angle corresponding to the radical direction of the center point of the block is not equal to 0 degrees or 90 degrees, the pre-set direction is a direction other than the vertical direction and the horizontal direction (i.e., a tilted direction). If both of the pixel values of the two pixels adjacent to the boundary point are the same as the pixel value of the boundary point, the sub-pixel value of the boundary point is 0; if only one of the pixel values of the two pixels adjacent to the boundary point is the same as the pixel value of the boundary point, the sub-pixel value of the boundary point is 0.25; if both of the pixel values of the two pixels adjacent to the boundary point are different from the pixel value of the boundary point, the sub-pixel value of the boundary point is 0.5.

Specifically, Figs. 6A to 6C are schematic diagrams of calculating the sub-pixel value along the non-vertical direction or non-horizontal direction (i.e., the oblique or tilted direction, as shown in Fig. 6A). As shown in the figures, the block filled with vertical stripe represents the boundary point, the block filled with white represents the point on the valley line, and the block filled with black represents the point on ridge line. When calculating the sub-pixel value of the boundary point, the pixel values of two pixels on both sides of the boundary point are used for determination. If both of the pixel values of two pixels on both sides of the boundary point are equal to the pixel value of the boundary point, then $\delta$ takes a value of 0; if one of the pixel values of two pixels on both sides of the boundary point is equal to the pixel value of the boundary point, $\delta$ takes a value of 1/4; if both of the pixel values of two pixels on both sides of the boundary point are different from the pixel value of the boundary point, $\delta$ takes a value of 1/2. For example, the two pixels adjacent to the boundary point are the blocks both filled with white in Fig. 6A, the two pixels adjacent to the boundary point are the blocks respectively filled with black and white in Fig. 6B, the two pixels adjacent to the boundary point are the blocks both filled with vertical stripe in Fig. 6C.

S6, generating the line distance according to the total number of times the pixel values of two adjacent pixels within the block change between the first pixel value and the second pixel value, and according to the coordinates and the sub-pixel value of the boundary point corresponding to the changing-point, where the line distance is the line distance of the center point of each block.

In an embodiment of the present disclosure, the line distance of the center point of a block is generated via the following formula:

$$D1(i,j) = \begin{cases} \dfrac{(X_{num1} - X_1 - \sum_{i=1}^{num1}\delta_{Xi})}{(num1-1)\times\sin\theta}, & \dfrac{\pi}{4} \le \theta \le \dfrac{3\pi}{4} \\[4mm] \dfrac{(X_{num1} - X_1 - \sum_{i=1}^{num1}\delta_{Xi})}{(num1-1)\times\cos\theta}, & else \end{cases}$$

$$(1)$$

$$D2(i,j) = \begin{cases} \dfrac{(Y_{num2} - Y_1 - \sum_{i=1}^{num2}\delta_{Yi})}{(num2-1)\times\sin\theta}, & \dfrac{\pi}{4} \le \theta \le \dfrac{3\pi}{4} \\[4mm] \dfrac{(Y_{num2} - Y_1 - \sum_{i=1}^{num2}\delta_{Yi})}{(num2-1)\times\cos\theta}, & else \end{cases}$$

$$(2)$$

$$D(i,j) = \frac{D1(i,j) + D2(i,j)}{2}$$

$$(3)$$

where num1 and num2 are the number of times the pixel values change between the first pixel value and the second pixel value, num1 is the number of times the pixel values of two adjacent pixels within the block change from the second pixel value to the first pixel value, num2 is the number of times the pixel values of two adjacent pixels within the block change from the first pixel value to the second pixel value, $X_1$ and $X_{num1}$ are respectively the horizontal coordinate of the boundary point corresponding to the point where the pixel values of two adjacent pixels change from the second pixel value to the first pixel value along the radical direction of the center point of the block for the first time, and the horizontal coordinate of the boundary point corresponding to the point where the pixel values of two adjacent pixels change from the second pixel value to the first pixel value along the radical direction of the center point of the block for the num1[th] time, $Y_1$ and $Y_{num2}$ are respectively the horizontal coordinate of the boundary point corresponding to the point where the pixel values of two adjacent pixels change from the first pixel value to the second pixel value along the radical direction of the center point of the block for the first time, and the horizontal coordinate of the boundary point corresponding to the point where the pixel values of two adjacent pixels change from the first pixel value to the second pixel value along the radical direction of the center point of the block for the num1[th] time, 0 is the radical angle of the center point of the block, and 0 is in a range of 0 to $\pi$, $\delta_{Xi}$ is the sub-pixel value of the boundary point corresponding to the point where the pixel values of two adjacent pixels change from the second pixel value to the first pixel value along the radical direction of the center point of the block for the ith time, $\delta_{Yi}$ is the sub-pixel value of the boundary point corresponding to the point where the pixel values of two adjacent pixels change from the first pixel value to the second pixel value along the radical direction of the center point of the block for the ith time, D1 (i, j) and D2(i, j) are respectively calculated distances according to the pixel values of two adjacent pixels changing from the second pixel value to the first pixel value and the pixel values of two adjacent pixels changing from the first pixel value to the second pixel value, D(i,j) is the line distance of the center point of the block.

In this way, the line distance of the center point of each block can be calculated.

In an embodiment of the present disclosure, the method for calculating the line distance also includes: obtaining the number of the boundary points of each block according to the number of times the pixel values of two adjacent pixels within each block change between the first pixel value and the second pixel value; for any block having the number of the boundary points less than a predetermined number, the pixels in a reverse direction of the radical direction of the center point of the block are further traversed within the block.

Specifically, it should be noted that the conditions that D1 (i, j) and D2 (i, j) need to satisfy are: ① D1, D2 in each block must have 2 or more value-changing boundary points where pixel value changes from 0 to 1 or from 1 to 0. That is, to complete a calculation of the line distance, two ridge lines and one valley line are needed, or two valley lines and one ridge line are needed. If the number of the ridge line and the valley line is not enough, then D1 and D2 do not exist; ② if any one of D1 and D2 does not exist, the other one of D1 and D2 needs to seek at least two changing points in the reverse direction of the radical direction.

The method for calculating the line distance according to the embodiments of the present disclosure seeks the boundary points of the fingerprint ridge lines and the fingerprint valley lines and calculates the line distance according to the coordinates and the sub-pixel values of the boundary points. The accuracy of the line distance may be improved, the true features of the fingerprint can be obtained more closely, and the overall density characteristics of the fingerprint can be reflected more accurately. Moreover, this method's ability to resist noise is strong, and the scope of its applications is wider.

In an embodiment of the present disclosure, after S6, the method for calculating the line distance also includes: performing 5*5 local region mean filtering on the line distance.

Specifically, the 5*5 local region mean filtering is performed on the calculated line distance to smoothen the calculated line distance to obtain a final line distance of each point.

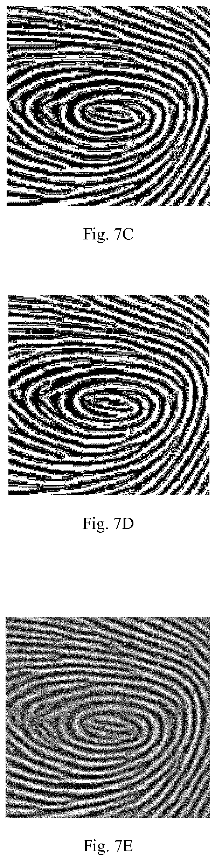

In addition, in order to make more intuitive of the calculation result of each step of the method for calculating the line distance of the embodiment of the present disclosure, effect diagram of each step of the method is given. Fig. 7A is a schematic diagram of a grayscale image, Fig. 7B is a schematic diagram of a tangential image, Fig. 7C is a schematic diagram of a smoothened image, Fig. 7D is a schematic diagram of a binary image, Fig. 7E is a schematic diagram of the results after Gabor filtering on final line distance data of each point.

The method for calculating the line distance according to embodiments of the present disclosure avoids the situation where it is relatively complex to obtain the extreme value of sinusoidal curve of the fingerprint. For example, in a place where there is one maximum point theoretically have more than two uncertain number of extreme points, the line distance of the fingerprint cannot be calculated accurately. According to the disclosed method for calculating the line distance according to the embodiment of the present disclosure, the boundary point of the ridge line and the valley line of the fingerprint is determined, it is certain that there is only one point, and there are no uncertain number of boundary points. Thus, there is a high redundancy for images with noise, requirements for the images are not stringent, and the scope of applications is expanded. The method has high engineering application value and can provide reliable parameters for subsequent image filtering, segmentation, ridge tracking, and matching.

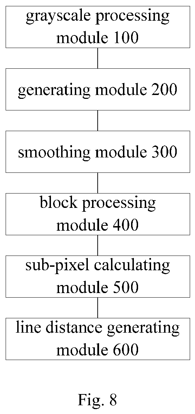

In accordance with the line distance calculation method provided by the above embodiments, an embodiment of the present disclosure also provides a calculating device for line distance. Because the line distance calculation device provided by the embodiment of the present disclosure corresponds to the method for calculating the line distance provided by the above embodiments, the aforementioned line distance calculation method is also adapted to the device for calculating the line distance provided in the present embodiment, and the calculation method is not described in detail in the present embodiment. Fig. 8 is a schematic diagram of the device for calculating line distance according to an embodiment of the present disclosure. As shown in Fig. 8, the calculating device according to an embodiment of the present disclosure includes: grayscale processing module 100, generating module 200, smoothing module 300, block processing module 400, sub-pixel calculating module 500, and line distance generating module 600.

The grayscale processing module 100 is configured to obtain an original image and to perform grayscale processing to generate a grayscale image.

The generating module 200 is configured to generate a radical image and a tangential image according to the grayscale image.

The smoothing module 300 is configured to perform filtering on the grayscale image according to the tangential image to generate a smoothened image and to convert the smoothened image into a binary image.

In an embodiment of the present disclosure, the smoothing module 300 is specifically configured to perform a 1*7 mean filtering on the grayscale image according to the tangential image to generate the smoothened image and to convert the smoothened image into the binary image.

The block processing module 400 is configured to divide the binary image into blocks and to determine a radical direction of a center point of each block according to the radical image.

The sub-pixel calculating module 500 is configured to traverse pixels in the radical direction of the center point of each block within each block to calculate a total number of times pixel values of two adjacent pixels within the each block change between a first pixel value and a second pixel value, and coordinates and sub-pixel value of a boundary point corresponding to a changing-point. The first pixel value is a pixel value of a pixel where a ridge line locates, the second pixel value is the pixel value of the pixel where the valley line is located.

In an embodiment of the present disclosure, the first pixel value is 0, the second pixel value is 1.

In an embodiment of the present disclosure, the sub-pixel calculating module 500 is configured to obtain the number of the boundary points of each block according to the number of times the pixel values of two adjacent pixels within the each block changing between the first pixel value and the second pixel value and, for a block with the number of the boundary points less than a pre-set number, to traverse the pixels within the block in a reverse direction of the radical direction of the center point of the block.

In an embodiment of the present disclosure, the sub-pixel calculating module 500 generates the sub-pixel value of the boundary point. Specifically, the pixel values of two pixels adjacent to the boundary point along a pre-set direction is obtained, and the sub-pixel value of the boundary point is calculated according to the pixel values of the two pixels adjacent to the boundary point and the pixel value of the boundary point.

In an embodiment of the present disclosure, when a radical angle corresponding to the radical direction of the center point of the block is equal to 0 degree, the sub-pixel calculating module 500 determines the pre-set direction as a vertical direction; when the radical angle corresponding to the radical direction of the center point of the block is equal to 90 degrees, the sub-pixel calculating module 500 determines the pre-set direction as a horizontal direction. Further, when both of the pixel values of the two pixels adjacent to the boundary point are the same as the pixel value of the boundary point, the sub-pixel calculating module 500 is configured to generate 0 as the sub-pixel value of the boundary point; when only one of the pixel value of the two pixels adjacent to the boundary point is the same as the pixel value of the boundary point, the sub-pixel calculating module 500 is configured to generate 0.5 as the sub-pixel value of the boundary point; when both of the pixel value of the two pixels adjacent to the boundary point are different from the pixel value of the boundary point, the sub-pixel calculating module 500 is configured to generates 1 as the sub-pixel value of the boundary point.

In another embodiment of the present disclosure, when the radical angle corresponding to the radical direction of the center point of the block is not equal to 0 or 90 degrees, the sub-pixel calculating module 500 determines the pre-set direction as a direction other than the radical direction and the horizontal direction. When both of the pixel value of the two pixels adjacent to the boundary point are the same as the pixel value of the boundary point, the sub-pixel calculating module 500 is further configured to generate 0 as the sub-pixel value of the boundary point; when only one of the pixel value of the two pixels adjacent to the boundary point is the same as the pixel value of the boundary point, the sub-pixel calculating module 500 is configured to generate 0.25 as the sub-pixel value of the boundary point; when both of the pixel value of the two pixels adjacent to the boundary point are different from the pixel value of the boundary point, the sub-pixel calculating module 500 is configured to generate 0.5 as the sub-pixel value of the boundary point.

The line distance generating module 600 is configured to generate the line distance according to the number of times the pixel values of two adjacent pixels within the block change between the first pixel value and the second pixel value, and according to the coordinates and the sub-pixel value of the boundary point corresponding to the changing-point.

In another embodiment of the present disclosure, the line distance generating module 600 generates the line distance via the formula (1), (2), and (3).

In an embodiment of the present disclosure, the line distance generating module 600 is also configured to perform 5*5 local region mean filtering on the line distance.

The device for calculating line distance according to an embodiment of the present disclosure seeks the boundary points of the fingerprint ridge lines and the fingerprint valley lines and calculates the line distance according to the coordinates and the sub-pixel values of the boundary points. The accuracy of the line distance may be improved, the true features of the fingerprint can be obtained more closely, and the overall density characteristics of the fingerprint can be reflected more accurately. Moreover, this method's ability to resist noise is strong, and the scope of its applications is wider.

Reference throughout this specification to "an embodiment," "some embodiments," "one embodiment", "another example," "an example," "a specific example," or "some examples," means that a particular feature, structure, material, or characteristic described in connection with the embodiment or example is included in at least one embodiment or example of the present disclosure. Thus, the appearances of the phrases such as "in some embodiments," "in one embodiment", "in an embodiment", "in another example," "in an example," "in a specific example," or "in some examples," in various places throughout this specification are not necessarily referring to the same embodiment or example of the present disclosure. Furthermore, the particular features, structures, materials, or characteristics may be combined in any suitable manner in one or more embodiments or examples.

It should be understood that each part of the present disclosure may be realized by the hardware, software, firmware or their combination. In the above embodiments, a plurality of steps or methods may be realized by the software or firmware stored in the memory and executed by the appropriate instruction execution system. For example, if it is realized by the hardware, likewise in another embodiment, the steps or methods may be realized by one or a combination of the following techniques known in the art: a discrete logic circuit having a logic gate circuit for realizing a logic function of a data signal, an application-specific integrated circuit having an appropriate combination logic gate circuit, a programmable gate array (PGA), a field programmable gate array (FPGA), etc.

Those skilled in the art shall understand that all or parts of the steps in the above exemplifying method of the present disclosure may be achieved by commanding the related hardware with programs. The programs may be stored in a computer readable storage medium, and the programs comprise one or a combination of the steps in the method embodiments of the present disclosure when run on a computer.

In addition, each function cell of the embodiments of the present disclosure may be integrated in a processing module, or these cells may be separate physical existence, or two or more cells are integrated in a processing module. The integrated module may be realized in a form of hardware or in a form of software function modules. When the integrated module is realized in a form of software function module and is sold or used as a standalone product, the integrated module may be stored in a computer readable storage medium.

The storage medium mentioned above may be read-only memories, magnetic disks, CD, etc. It should be noted that, although the present disclosure has been described with reference to the embodiments, it will be appreciated by those skilled in the art that the disclosure includes other examples that occur to those skilled in the art to execute the disclosure. Therefore, the present disclosure is not limited to the embodiments.

**Claims**

1. A method for calculating a line distance of a fingerprint, comprising:

    obtaining an original image and performing grayscale processing to generate a grayscale image;
    generating a radical image and a tangential image according to the grayscale image;
    performing filtering on the grayscale image according to the tangential image to generate a smoothened image and converting the smoothened image into a binary image;
    dividing the binary image into blocks and determining a radical direction of a center point of each block according to the radical image;
    traversing pixels in the radical direction of the center point of each block to calculate a number of times pixel values of two adjacent pixels within the each block change between a first pixel value and a second pixel value, and to calculate a coordinate and sub-pixel value of a boundary point corresponding to a changing-point, wherein the first pixel value is a pixel value of a pixel of a ridge line, and the second pixel value is a pixel value of a pixel of a valley line; and
    generating the line distance of the fingerprint according to the number of times the pixel values of two adjacent pixels within the each block change between the first pixel value and the second pixel value, and according to the coordinate and the sub-pixel value of the boundary point corresponding to the changing-point.

2. The method according to claim 1, further comprising:

    obtaining a total number of the boundary points of the each block according to the number of times the pixel values of two adjacent pixels within the each block changing between the first pixel value and the second pixel value; and
    when the total number of the boundary points of the block is less than a pre-set number, traversing pixels in a reverse direction of the radical direction of the center point within the block.

3. The method according to claim 1 or 2, wherein the sub-pixel value of the boundary point corresponding to the changing-point is calculated by:

    obtaining the pixel values of two pixels adjacent to the boundary point along a pre-set direction; and
    generating the sub-pixel value of the boundary point according to the pixel values of the two pixels adjacent to the boundary point and the pixel value of the boundary point.

4. The method according to claim 3, wherein generating the sub-pixel value of the boundary point according to the pixel values of the two pixels adjacent to the boundary point and the pixel value of the boundary point further includes:

    when a radical angle corresponding to the radical direction of the center point of the block is equal to 0 degree, determining the pre-set direction as a vertical direction; and
    when both of the pixel values of the two pixels adjacent to the boundary point are the same as the pixel value of the boundary point, generating 0 as the sub-pixel value of the boundary point;
    when only one of the pixel values of the two pixels adjacent to the boundary point is the same as the pixel value of the boundary point, generating 0.5 as the sub-pixel value of the boundary point; or
    when both of the pixel values of the two pixels adjacent to the boundary point are different from the pixel value of the boundary point, generating 1 the as the sub-pixel value of the boundary point.

5. The method according to claim 3, wherein generating the sub-pixel value of the boundary point according to the pixel values of the two pixels adjacent to the boundary point and the pixel value of the boundary point further includes:

    when the radical angle corresponding to the radical direction of the center point of the block is equal to 90 degrees, determining the pre-set direction as a horizontal direction; and
    when both of the pixel values of the two pixels adjacent to the boundary point are the same as the pixel value of the boundary point, generating 0 as the sub-pixel value of the boundary point;

when only one of the pixel values of the two pixels adjacent to the boundary point is the same as the pixel value of the boundary point, generating 0.5 as the sub-pixel value of the boundary point; or

when both of the pixel values of the two pixels adjacent to the boundary point are different from the pixel value of the boundary point, generating 1 as the sub-pixel value of the boundary point.

6. The method according to claim 3, wherein generating the sub-pixel value of the boundary point according to the pixel values of the two pixels adjacent to the boundary point and the pixel value of the boundary point further incudes:

when the radical angle corresponding to the radical direction of the center point of the block is not equal to 0 degree or 90 degrees, determining the pre-set direction as a direction other than the vertical direction and the horizontal direction; and

when both of the pixel values of the two pixels adjacent to the boundary point are the same as the pixel value of the boundary point, generating 0 as the sub-pixel value of the boundary point;

when only one of the pixel values of the two pixels adjacent to the boundary point is the same as the pixel value of the boundary point, generating 0.25 as the sub-pixel value of the boundary point; or

when both of the pixel values of the two pixels adjacent to the boundary point are different from the pixel value of the boundary point, generating 0.5 as the sub-pixel value of the boundary point.

7. The method according to any one of claims 1 to 6, wherein the line distance of the center point of one block is generated using:

$$D1(i,j) = \begin{cases} \dfrac{(X_{num1} - X_1 - \sum_{i=1}^{num1} \delta_{Xi})}{(num1-1) \times \sin\theta}, & \dfrac{\pi}{4} \leq \theta \leq \dfrac{3\pi}{4} \\[4mm] \dfrac{(X_{num1} - X_1 - \sum_{i=1}^{num1} \delta_{Xi})}{(num1-1) \times \cos\theta}, & else \end{cases} \tag{1}$$

$$D2(i,j) = \begin{cases} \dfrac{(Y_{num2} - Y_1 - \sum_{i=1}^{num2} \delta_{Yi})}{(num2-1) \times \sin\theta}, & \dfrac{\pi}{4} \leq \theta \leq \dfrac{3\pi}{4} \\[4mm] \dfrac{(Y_{num2} - Y_1 - \sum_{i=1}^{num2} \delta_{Yi})}{(num2-1) \times \cos\theta}, & else \end{cases} \tag{2}$$

$$D(i,j) = \dfrac{D1(i,j) + D2(i,j)}{2} \tag{3}$$

wherein num1 is a number of times the pixel values of two adjacent pixels within the block change from the second pixel value to the first pixel value, num2 is a number of times the pixel values of two adjacent pixels within the block change from the first pixel value to the second pixel value, $X_1$ and $X_{num1}$ are respectively the horizontal coordinate of the boundary point corresponding to the point where the pixel values of two adjacent pixels change from the second pixel value to the first pixel value along the radical direction of the center point of the block for the first time, and the horizontal coordinate of the boundary point corresponding to the point where the pixel values of two adjacent pixels change from the second pixel value to the first pixel value along the radical direction of the center point of the block for the num1[th] time, $Y_1$ and $Y_{num2}$ are respectively the horizontal coordinate of the boundary point corresponding to the point where the pixel values of two adjacent pixels change from the first pixel value to the second pixel value along the radical direction of the center point of the block for the first time, and the horizontal coordinate of the boundary point corresponding to the point where the pixel values of two adjacent pixels change from the first pixel value to the second pixel value along the radical direction of the center point of the block for the num1[th] time, 0 is the radical angle of the center point of the block, and $\theta$ is in a range of 0 to $\pi$, $\delta_{Xi}$ is the sub-pixel value of the boundary point corresponding to the point where the pixel values of two adjacent pixels change from the second pixel value to the first pixel value along the radical direction of the center point of the block for the ith time, $\delta_{Yi}$ is the sub-pixel value of the boundary point corresponding to the point where the pixel values of two adjacent pixels change from the first pixel value to the second pixel value along the radical direction of the center point of the block for the ith

time, D1(i, j) and D2(i, j) are respectively calculated distances according to the pixel values of two adjacent pixels changing from the second pixel value to the first pixel value and the pixel values of two adjacent pixels changing from the first pixel value to the second pixel value, D(i,j) is the line distance of the center point of the block.

8. The method according to any one of claims 1 to 7, after generating the line distance according to the number of times the pixel values of two adjacent pixels within each block change between the first pixel value and the second pixel value, and according to the coordinate and the sub-pixel value of the boundary point corresponding to the changing-point, further comprising:

    performing 5*5 local region mean filtering on the line distance.

9. A device for calculating a line distance of a fingerprint, comprising:

    a gray processing module configured to obtain an original image and to perform grayscale processing to generate a grayscale image;
    a generating module configured to generate a radical image and a tangential image according to the grayscale image;
    a smoothing module configured to perform filtering on the grayscale image according to the tangential image to generate a smoothened image and to convert the smoothened image into a binary image;
    a block processing module configured to divide the binary image into blocks and to determine a radical direction of a center point of each block according to the radical image;
    a sub-pixel calculating module configured to traverse pixels in the radical direction of the center point of each block to calculate a number of times pixel values of two adjacent pixels within the each block change between a first pixel value and a second pixel value, and to calculate a coordinate and sub-pixel value of a boundary point corresponding to a changing-point, wherein the first pixel value is a pixel value of a pixel of a ridge line, and the second pixel value is a pixel value of a pixel of a valley line; and
    a line distance generating module configured to generate the line distance according to the number of times the pixel values of two adjacent pixels within the each block change between the first pixel value and the second pixel value, and according to the coordinate and the sub-pixel value of the boundary point corresponding to the changing-point.

10. The device according to claim 1, wherein the sub-pixel calculating module is also configured to obtain a total number of the boundary points of the each block according to the number of times the pixel values of two adjacent pixels within the each block changing between the first pixel value and the second pixel value and, when the total number of the boundary points of the block is less than a pre-set number, to traverse pixels in a reverse direction of the radical direction of the center point within the block.

11. The device according to claim 9 and 10, wherein the sub-pixel calculating module is also configured to obtain the pixel values of two pixels adjacent to the boundary point along a pre-set direction; and to generate the sub-pixel value of the boundary point according to the pixel values of the two pixels adjacent to the boundary point and the pixel value of the boundary point.

12. The device according to claim 11, wherein:

    when a radical angle corresponding to the radical direction of the center point of the block is equal to 0 degree, the sub-pixel calculating module is configured to determine the pre-set direction as a vertical direction; and:

        when both of the pixel values of the two pixels adjacent to the boundary point are the same as the pixel value of the boundary point, the sub-pixel calculating module generates 0 as the sub-pixel value of the boundary point;
        when only one of the pixel values of the two pixels adjacent to the boundary point is the same as the pixel value of the boundary point, the sub-pixel calculating module generates 0.5 as the sub-pixel value of the boundary point;
        when both of the pixel values of the two pixels adjacent to the boundary point are different from the pixel value of the boundary point, the sub-pixel calculating module generates 1 the as sub-pixel value of the boundary point.

13. The device according to claim 11, wherein:

when the radical angle corresponding to the radical direction of the center point of the block is equal to 90 degrees, the sub-pixel calculating module is configured to determine the pre-set direction as a horizontal direction; and

when both of the pixel values of the two pixels adjacent to the boundary point are the same as the pixel value of the boundary point, the sub-pixel calculating module further generates 0 as the sub-pixel value of the boundary point;

when only one of the pixel values of the two pixels adjacent to the boundary point is the same as the pixel value of the boundary point, the sub-pixel calculating module generates 0.5 as the sub-pixel value of the boundary point;

when both of the pixel values of the two pixels adjacent to the boundary point are different from the pixel value of the boundary point, the sub-pixel calculating module generates 1 as the sub-pixel value of the boundary point.

14. The device according to claim 11, wherein:

when the radical angle corresponding to the radical direction of the center point of the block is not equal to 0 degree or 90 degrees, the sub-pixel calculating module is configured to determine the pre-set direction as a direction other than the vertical direction and the horizontal direction; and

when both of the pixel values of the two pixels adjacent to the boundary point are the same as the pixel value of the boundary point, the sub-pixel calculating module generates 0 as the sub-pixel value of the boundary point;

when only one of the pixel values of the two pixels adjacent to the boundary point is the same as the pixel value of the boundary point, the sub-pixel calculating module generates 0.25 as the sub-pixel value of the boundary point;

when both of the pixel values of the two pixels adjacent to the boundary point are different from the pixel value of the boundary point, the sub-pixel calculating module generates 0.5 as the sub-pixel value of the boundary point.

15. The device according any one of claim 9 to 14, wherein the line distance generating module is also configured to generate the line distance the of the center point of one block using:

$$
D1(i,j) = \begin{cases} \dfrac{(X_{num1} - X_1 - \sum_{i=1}^{num1} \delta_{Xi})}{(num1 - 1) \times \sin\theta}, & \dfrac{\pi}{4} \le \theta \le \dfrac{3\pi}{4} \\[2ex] \dfrac{(X_{num1} - X_1 - \sum_{i=1}^{num1} \delta_{Xi})}{(num1 - 1) \times \cos\theta}, & else \end{cases}
$$

$$
D2(i,j) = \begin{cases} \dfrac{(Y_{num2} - Y_1 - \sum_{i=1}^{num2} \delta_{Yi})}{(num2 - 1) \times \sin\theta}, & \dfrac{\pi}{4} \le \theta \le \dfrac{3\pi}{4} \\[2ex] \dfrac{(Y_{num2} - Y_1 - \sum_{i=1}^{num2} \delta_{Yi})}{(num2 - 1) \times \cos\theta}, & else \end{cases}
$$

$$
D(i,j) = \frac{D1(i,j) + D2(i,j)}{2}
$$

wherein num1 is a number of times the pixel values of two adjacent pixels within the block change from the second pixel value to the first pixel value, num2 is a number of times the pixel values of two adjacent pixels within the block change from the first pixel value to the second pixel value, $X_1$ and $X_{num1}$ are respectively the horizontal coordinate of the boundary point corresponding to the point where the pixel values of two adjacent pixels change from the second pixel value to the first pixel value along the radical direction of the center point of the block for the first time, and the horizontal coordinate of the boundary point corresponding to the point where the pixel values of two adjacent pixels change from the second pixel value to the first pixel value along the radical direction of the center point of the block for the num1[th] time, $Y_1$ and $Y_{num2}$ are respectively the horizontal coordinate of the boundary point corresponding to the point where the pixel values of two adjacent pixels change from the first pixel value to the second pixel value along the radical direction of the center point of the block for the first time, and the horizontal coordinate of the boundary point corresponding to the point where the pixel values of two adjacent pixels change from the first pixel value to the second pixel value along the radical direction of the center point of the block for the num1$^{th}$ time, $\theta$ is the radical angle of the center point of the block, and $\theta$ is in a range of 0 to $\pi$, $\delta_{Xi}$ is the sub-pixel value of the boundary point corresponding to the point where the pixel values of two adjacent pixels change from the second pixel value to the first pixel value along the radical direction of the center point of the block for the i$^{th}$ time, $\delta_{Yi}$ is the sub-pixel value of the boundary point corresponding to the point where the pixel values of two adjacent pixels change from the first pixel value to the second pixel value along the radical direction of the center point of the block for the i$^{th}$ time, D1(i, j) and D2(i, j) are respectively calculated distances according to the pixel values of two adjacent pixels changing from the second pixel value to the first pixel value and the pixel values of two adjacent pixels changing from the first pixel value to the second pixel value, D(i,j) is the line distance of the center point of the block.

16. The device according to any one of claims 9 to 15, wherein the line distance generating module is configured to performing 5*5 local region mean filtering on the line distance.

17. A computer program for causing a computer to execute the method according to any one of claims 1-8 when running on the computer.

18. A computer readable storage medium comprising a computer program according to claim 17 stored thereon.

Fig. 1 (prior art)

```
┌─────────────────────────────────────────────────────┐
│   obtaining an original image and performing grayscale │  S1
│        processing to generate a grayscale image        │
└─────────────────────────────────────────────────────┘
                          │
                          ▼
┌─────────────────────────────────────────────────────┐
│  generating a radical image and a tangential image    │  S2
│        according to the grayscale image               │
└─────────────────────────────────────────────────────┘
                          │
                          ▼
┌─────────────────────────────────────────────────────┐
│     performing filtering on the grayscale image       │  S3
│  according to the tangential image to generate a       │
│  smoothened image and converting the                   │
│         smoothened image into a binary image          │
└─────────────────────────────────────────────────────┘
                          │
                          ▼
┌─────────────────────────────────────────────────────┐
│  dividing the binary image into blocks and determining │  S4
│     the radical direction of the center point          │
│                   of each block                        │
└─────────────────────────────────────────────────────┘
                          │
                          ▼
┌─────────────────────────────────────────────────────┐
│  traversing pixels in the radical direction of the     │
│  center point of each block to calculate a total       │
│  number of times the pixel values of two adjacent      │
│  pixels within each block change between a first        │
│  pixel value and a second pixel value, and to          │  S5
│  calculate coordinates and sub-pixel value of a        │
│  boundary point corresponding to the changing-point.   │
│  The first pixel value is the pixel value of a pixel    │
│  of a ridge line, and the second pixel value is the    │
│  pixel value of a pixel of a valley line.              │
└─────────────────────────────────────────────────────┘
                          │
                          ▼
┌─────────────────────────────────────────────────────┐
│  generating the line distance according to the total   │  S6
│  number of times the pixel values of two adjacent      │
│  pixels within the block change between the first      │
│  pixel value and the second pixel value, and           │
│  according to the coordinates and the sub-pixel value  │
│  of the boundary point corresponding to the            │
│                 changing-point                          │
└─────────────────────────────────────────────────────┘
```

Fig. 2

Fig. 3

| S51 | obtaining the pixel values of two pixels adjacent to the boundary point along a preset direction |

| S52 | generating the sub-pixel value of the boundary point according to the pixel values of the two pixels adjacent to the boundary point and the pixel value of the boundary point |

Fig. 4

Fig. 5A

Fig. 5B

Fig. 5C

Fig. 6A

Fig. 6B

Fig. 6C

Fig. 7A

Fig. 7B

Fig. 7C

Fig. 7D

Fig. 7E

grayscale processing
module 100

generating module 200

smoothing module 300

block processing
module 400

sub-pixel calculating
module 500

line distance generating
module 600

Fig. 8

# INTERNATIONAL SEARCH REPORT

| International application No. |
|---|
| PCT/CN2016/070192 |

## A. CLASSIFICATION OF SUBJECT MATTER

G06T 7/00 (2006.01) i

According to International Patent Classification (IPC) or to both national classification and IPC

## B. FIELDS SEARCHED

Minimum documentation searched (classification system followed by classification symbols)

G06T; G06K; G06F

Documentation searched other than minimum documentation to the extent that such documents are included in the fields searched

Electronic data base consulted during the international search (name of data base and, where practicable, search terms used)

CNPAT, CNKI, WPI, EPODOC: streakline, ridge, fingerprint, ridge, distance, identify, image, pixel, tangent, normal, line, partion, divid+, block, smooth+, filter+, valley, boundary, chang+, number, time, grey, coordinate

## C. DOCUMENTS CONSIDERED TO BE RELEVANT

| Category* | Citation of document, with indication, where appropriate, of the relevant passages | Relevant to claim No. |
|---|---|---|
| PX | CN 105205802 A (BYD CO., LTD.) 13 December 2015 (13.12.2015) claims 1-14, and description, paragraph [0079] | 1-17 |
| A | CN 1737821 A (FUYANG TEACHERS COLLEGE) 22 February 2006 (22.02.2006) the abstract, and description, page 7, lines 6-16 | 1-17 |
| A | CN 101271516 A (FAN, Jiulun) 24 September 2008 (24.09.2008) the abstract, and description, page 3, line 13 to page 6, line 3 | 1-17 |
| A | CN 102930241 A (BEIJING TECHSHINO TECHNOLOGY CO., LTD.) 13 February 2013 (13.02.2013) the whole document | 1-17 |
| A | CN 1818927 A (ZHONGKONG SCIENCE AND TECHNOLOGY DEVELOPMENT CO., LTD.) 16 August 2006 (16.08.2006) the whole document | 1-17 |

☒ Further documents are listed in the continuation of Box C.  ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
|---|---|
| 15 March 2016 | 31 March 2016 |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>JIANG, Lingling<br><br>Telephone No. (86-10) 61648103 |

Form PCT/ISA /210 (second sheet) (July 2009)

**INTERNATIONAL SEARCH REPORT**

| | International application No. |
|---|---|
| | PCT/CN2016/070192 |

C (Continuation).     DOCUMENTS CONSIDERED TO BE RELEVANT

| Category* | Citation of document, with indication, where appropriate, of the relevant passages | Relevant to claim No. |
|---|---|---|
| A | US 6961453 B2 (SECUGEN CORPORATION) 01 November 2005 (01.11.2005) the whole document | 1-17 |

Form PCT/ISA /210 (continuation of second sheet) (July 2009)

**INTERNATIONAL SEARCH REPORT**
Information on patent family members

| | International application No. |
|---|---|
| | PCT/CN2016/070192 |

| Patent Documents referred in the Report | Publication Date | Patent Family | Publication Date |
|---|---|---|---|
| CN 105205802 A | 13 December 2015 | None | |
| CN 1737821 A | 22 February 2006 | None | |
| CN 101271516 A | 24 September 2008 | None | |
| CN 102930241 A | 13 February 2013 | None | |
| CN 1818927 A | 16 August 2006 | WO 2007107050 A1 | 27 September 2007 |
| US 6961453 B2 | 01 November 2005 | KR 20030019788 A | 07 March 2003 |

Form PCT/ISA /210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201510080690